# EUROPÄISCHE PATENTANMELDUNG

(11) **EP 4 040 282 A1**
(43) Veröffentlichungstag der Anmeldung: **10.08.2022**
(21) Anmeldenummer: 22153303.7
(22) Anmeldetag: 25.01.2022
(51) Int. Cl.: G06F 3/147

(54) **WARENETIKETT UND VERFAHREN ZUM AUSZEICHNEN EINER WARE**

(30) Priorität: 04.02.2021 DE 102021102629
(71) Anmelder: Novento UG (haftungsbeschränkt), 40221 Düsseldorf (DE)
(72) Erfinder: Stein, Maternus, 40221 Düsseldorf (DE)
(74) Vertreter: Bauer, Dirk

(57) **Zusammenfassung**

Offenbart ist ein Warenetikett mit einem Display, einem Funkelement zur drahtlosen Verbindung mit einem Auszeichnungsserver und einer Spannungsquelle zur Energieversorgung. Offenbart ist weiterhin ein Verfahren zum Auszeichnen einer Ware mit einem solchen Warenetikett.

Um das Auszeichnen von Waren zu vereinfachen wird vorgeschlagen, dass das Funkelement in einem Niedrigenergienetzwerk über eine Mobilfunkfrequenz mit dem Auszeichnungsserver verbunden ist.

## Beschreibung

Die Erfindung betrifft ein Warenetikett mit einem Display, einem Funkelement zur drahtlosen Verbindung mit einem Auszeichnungsserver und einer Spannungsquelle zur Energieversorgung. Die Erfindung betrifft weiterhin ein Verfahren zum Auszeichnen einer Ware mit einem solchen Warenetikett.

Ein Warenetikett ist ein Element zur Anzeige des Preises einer Ware in von Menschen lesbarer Klarschrift. Warenetiketten sind zunächst aus Papier bekannt, das manuell beschrieben oder mit speziellen Etikettendruckern bedruckt und unmittelbar auf die Ware, deren Verpackung und/oder auch je nach rechtlichen Anforderungen an einen Behälter oder ein Regal mit der Ware geklebt wird.

Zunehmend kommen sowohl zur Auszeichnung an Waren als auch an Behältern oder Regalen Warenetiketten mit einem kleinen digitalen Display - mit wenigen cm² bis dm² Anzeigefläche - zum Einsatz, die nach Abverkauf zum Auszeichnen einer anderen Ware wiederverwendet werden können. Darüber hinaus kann der von solchen Warenetiketten dargestellte Inhalt bei Preisänderungen geändert werden.

Aus US 9,679,310 B1 ist ein solches Warenetikett bekannt mit einem ePaper-Display, das drahtlos über kurze Distanzen via Bluetooth (hier: Bluetooth Low Energy, BLE) angesteuert wird. Ergänzend ist dieses Warenetikett mit einem Peilsender ausgerüstet, der in kurzen Abständen Informationen über BLE ausstrahlt.

US 2018/0270734 A1 offenbart ein BLE-basiertes vermaschtes Netzwerk (Mesh) aus solchen Warenetiketten. Weitere Warenetiketten der vorgenannten Art sind aus WO 2017/201215 A1 und aus US 9,824,624 B2 bekannt.

Die bekannten Warenetiketten werden über kurze Distanzen insbesondere mittels mobiler Endgeräte - beispielsweise Laptops oder Smartphones - als Auszeichnungsserver konfiguriert.

Im Hintergrund der Erfindung offenbart US 9,824,6244 B2 ein langgestrecktes LED-Display zur Montage an einem Warenregal und Anzeige von Videos, Bildern und Texten, das kabellos - beispielsweise über WiFi oder Mobilfunk - gesteuert wird.

### Aufgabe

Der Erfindung liegt die Aufgabe zugrunde, das Auszeichnen von Waren zu vereinfachen.

### Lösung

Ausgehend von dem bekannten Warenetikett wird nach der Erfindung vorgeschlagen, dass das Funkelement in einem Niedrigenergienetzwerk (Low Power Network, LPN) über eine Mobilfunkfrequenz mit dem Auszeichnungsserver verbindbar ist. Das erfindungsgemäße Warenetikett kann dann von einem an einem beliebigen Ort mit dem Internet verbundenen Auszeichnungsserver, insbesondere auch von einem zentralen Auszeichnungsserver für mehrere Verkaufsstellen eines Filialisten konfiguriert werden. Als LPN im Mobilfunknetz ist insbesondere das von 3GPP definierte Narrowband Internet of Things (NB-IoT) bekannt.

Vorzugsweise ist das Display eines erfindungsgemäßen Warenetiketts bistabil, weist also zwei stabile, sich optisch unterscheidende Zustände auf. Der angezeigte Inhalt des Displays bleibt dann ohne äußere Energiezufuhr erhalten. Ein solches Display wird als "elektronisches Papier" (E-Papier oder ePaper) bezeichnet.

Vorzugsweise weist das Display eines erfindungsgemäßen Warenetiketts eine Fläche von weniger als 200, vorzugsweise weniger als 100, weiter vorzugweise weniger als 50 cm² auf. Ein solches erfindungsgemäßes Warenetikett ist besonders zur Auszeichnung von Waren an einem Regal geeignet und bietet Platz für ergänzende Informationen, beispielsweise zum Hersteller, zur Haltbarkeit, zu weiteren technischen Eigenschaften, Artikelnummern oder Internetlinks (URLs) zu weiteren Produktinformationen. Auch maschinenlesbare optische Codes (Bar- oder Matrixcodes) mit solchen Informationen können dargestellt werden.

Vorzugsweise weist ein erfindungsgemäßes Warenetikett einen Peilsender auf, der in einem festen Zeitintervall als Short Range Device Informationen zu seiner eigenen Identität sendet. Solche Peilsender sind unter der Bezeichnung "Beacon" allgemein bekannt. Bekannte Implementierungen (iBeacon, Eddystone) basieren insbesondere auf Bluetooth Low Energy (BLE). Ein solches erfindungsgemäßes Warenetikett erlaubt seine eigene Lokalisierung ("Peilung") oder durch Triangulation in Kombination mit mindestens zwei weiteren gleichartigen Warenetiketten die Lokalisierung eines mobilen Empfängers relativ zu diesen.

Ausgehend von den bekannten Verfahren wird nach der Erfindung vorgeschlagen, dass das Funkelement in einem Niedrigenergienetzwerk über eine Mobilfunkfrequenz mit dem Auszeichnungsserver verbunden ist. Das erfindungsgemäße Verfahren lässt sich mit einem der vorstehend beschriebenen Warenetiketten ausführen und zeichnet sich gleichermaßen durch deren Vorteile aus.

Vorzugsweise übermittelt in einem erfindungsgemäßen Verfahren der Auszeichnungsserver die Daten auf eine Vielzahl von mit dem Warenetikett ähnlichen Elementen. Ein solches erfindungsgemäßes Verfahren erlaubt unabhängig vom Standort die gleichzeitige Änderung der Auszeichnung für eine Vielzahl von Elementen, insbesondere bei Preisänderungen.

Vorzugsweise empfängt in einem erfindungsgemäßen Verfahren ein mobiles Endgerät Identitätsdaten des Warenetiketts und erkennt anhand der Identitätsdaten eine Annäherung an das Warenetikett. In einem solchen erfindungsgemäßen Verfahren kann aus der Annäherung des mobilen Endgeräts an das Warenetikett auf eine Annäherung eines Nutzers des Endgeräts an die mit dem Warenetikett ausgezeichnete Ware geschlossen und diese Information genutzt werden.

Vorzugsweise zeigt in einem solchen erfindungsgemäßen Verfahren das mobile Endgerät bei Annäherung an das Warenetikett eine diesem zugeordnete Information an. In einem solchen erfindungsgemäßen Verfahren wird der Nutzer des Endgeräts bei Annäherung an die ausgezeichnete Ware gezielt zu dieser informiert.

Vorzugsweise enthalten in einem erfindungsgemäßen Verfahren die Identitätsdaten eine auf die Information verweisende URL auf einem Informationsserver. Die Information kann dann über die URL von dem Informationsserver abgerufen werden. Alternativ kann die Information auf dem Endgerät hinterlegt sein und unabhängig von einem Internetzugang des Endgeräts abgerufen und dargestellt werden.

Vorzugsweise meldet in einem erfindungsgemäßen Verfahren das mobile Endgerät die Annäherung an das Warenetikett an einen Informationsserver. Auch in einem solchen erfindungsgemäßen Verfahren kann der Informationsserver die Information dem Endgerät zur Darstellung bereitstellen. Außerdem kann in einem solchen erfindungsgemäßen Verfahren der Informationsserver auf einen Aufenthaltsort des Nutzers in der Umgebung des Warenetiketts schließen und diese Information weiter nutzen.

Bei gleichzeitiger Annäherung des Endgeräts an mindestens drei erfindungsgemäße Warenetiketten mit bekannten Koordinaten kann der Informationsserver durch Triangulation den Aufenthaltsort exakt bestimmen.

### Ausführungsbeispiele

Die Erfindung wird nachfolgend anhand von Ausführungsbeispielen erläutert.

Ein erstes erfindungsgemäßes Warenetikett weist ein Gehäuse aus Kunststoff mit Abmessungen von 86 x 49 x 16 *mm*, einem ePaper-Display mit einer sichtbaren Anzeigefläche von 57 x 38 mm (Bildschirmdiagonale 2,7"), integrierten Batterien als Spannungsquelle zur Energieversorgung, einem NB-loT-Funkelement und einem iBeacon als Peilsender auf.

Das erfindungsgemäße Warenetikett ist in einem Warenhaus an einem Regal angebracht und zeigt den Preis eines in dem Regal liegenden Smartphones. Das Warenetikett ist über das Funkmodul mit einem zentralen Auszeichnungsserver der Warenhauskette verbunden. Der Auszeichnungsserver zeigt in allen Warenhäusern der Kette für dieselben Smartphones immer denselben Preis.

Der Peilsender des Warenetiketts sendet ständig über BLE im Abstand von 100 *ms* mit einer Leistung, die den Empfang im Umkreis von 5 *m* sicherstellt seine eigenen, einzigartigen Identifikationsdaten. Eine Smartphone-Applikation auf einem mobilen Endgerät eines Nutzers, der sich dem Regal nähert, übermittelt über Internet die Identifikationsdaten des Warenetiketts an einen Informationsserver der Warenhauskette, der aufgrund der Identifikationsdaten des Warenetikett eine der Ware zugeordnete Information - beispielsweise einen interaktiven Werbespot zu dem Smartphone - an das mobile Endgerät übermittelt.

Während der Nutzer mit dem Werbespot interagiert, übermittelt der Informationsserver diese Information an den Auszeichnungsserver, der durch Invertieren der Darstellung ein kurzes Blinken des Bildschirms des Warenetiketts veranlasst.

Weitere erfindungsgemäße Warenetiketten weisen Bildschirmdiagonalen von 4.4, 7 und 7.4" auf. Auf diesen erfindungsgemäßen Warenetiketten werden zugleich mit dem Preis zusätzliche Informationen zu der ausgezeichneten Ware, insbesondere ein Herstellerlogo und ausgewählte technische Spezifikationen dargestellt.

## Patentansprüche

1. Warenetikett mit einem Display, einem Funkelement zur drahtlosen Verbindung mit einem Auszeichnungsserver und einer Spannungsquelle zur Energieversorgung, ***dadurch gekennzeichnet, dass*** das Funkelement in einem Niedrigenergienetzwerk über eine Mobilfunkfrequenz mit dem Auszeichnungsserver verbindbar ist.

2. Warenetikett nach dem vorgenannten Anspruch, ***dadurch gekennzeichnet, dass*** das Display bistabil ist.

3. Warenetikett nach einem der vorgenannten Ansprüche, ***dadurch gekennzeichnet, dass*** das Display eine Fläche von weniger als 200, vorzugsweise weniger als 100, weiter vorzugweise weniger als 50 *cm²* aufweist.

4. Warenetikett nach einem der vorgenannten Ansprüche, ***gekennzeichnet durch*** einen Peilsender, der in einem festen Zeitintervall als Short Range Device Informationen zu seiner eigenen Identität sendet.

5. Verfahren zum Auszeichnen einer Ware mit einem Warenetikett, das drahtlos mittels eines Funkelements von einem Auszeichnungsserver empfangene Daten auf einem Display darstellt, ***dadurch gekennzeichnet, dass*** das Funkelement in einem Niedrigenergienetzwerk über eine Mobilfunkfrequenz mit dem Auszeichnungsserver verbunden ist.

6. Verfahren nach dem vorgenannten Anspruch, ***dadurch gekennzeichnet, dass*** der Auszeichnungsserver die Daten auf eine Vielzahl von mit dem Warenetikett ähnlichen Elementen übermittelt.

7. Verfahren nach einem der Ansprüche 5 und 6, ***dadurch gekennzeichnet, dass*** ein mobiles Endgerät Identitätsdaten des Warenetiketts empfängt und anhand der Identitätsdaten eine Annäherung an das Warenetikett erkennt.

8. Verfahren nach dem vorgenannten Anspruch, ***dadurch gekennzeichnet, dass*** das mobile Endgerät bei Annäherung an das Warenetikett eine diesem zugeordnete Information anzeigt.

9. Verfahren nach dem vorgenannten Anspruch, ***dadurch gekennzeichnet, dass*** die Identitätsdaten eine auf die Information verweisende URL enthalten.

10. Verfahren nach einem der Ansprüche 8 und 9, ***dadurch gekennzeichnet, dass*** das mobile Endgerät die Annäherung an das Warenetikett an einen Informationsserver meldet.
